# EUROPÄISCHE PATENTSCHRIFT

(11) **EP 2 695 992 B1**
(45) Veröffentlichungstag und Bekanntmachung des Hinweises auf die Patenterteilung: **07.12.2016**
(21) Anmeldenummer: 13003765.8
(22) Anmeldetag: 29.07.2013
(51) Int. Cl.: E01C 11/22, C04B 28/04, C04B 28/08

(54) **BETONFORMTEIL UND VERFAHREN ZUR HERSTELLUNG EINES BETONFORMTEILS**
MOULDED CONCRETE PART AND METHOD FOR THE PRODUCTION OF A MOULDED CONCRETE PART
PIÈCE MOULÉE EN BÉTON ET PROCÉDÉ DE FABRICATION D'UNE PIÈCE MOULÉE EN BÉTON

(30) Priorität: 10.08.2012 DE 102012016795
(43) Veröffentlichungstag der Anmeldung: 12.02.2014
(73) Patentinhaber: Hans Rinninger u. Sohn GmbH & Co., 88353 Kisslegg (DE)
(72) Erfinder: Rinninger, Jörg, 88353 Kisslegg (DE); Rrjolli, Hylli, 89278 Nersingen (DE)
(74) Vertreter: Otten, Roth, Dobler & Partner mbB Patentanwälte

(56) Entgegenhaltungen:
- EP-A2- 1 277 553
- US-A1- 2007 079 732
- CHEMICAL ABSTRACTS, 16. November 1987 (1987-11-16), XP000183892, ISSN: 0009-2258
- DATABASE WPI Week 200959 Thomson Scientific, London, GB; AN 2009-N15124 XP002735915, & JP 2009 196856 A (MITSUI CONSTR CO LTD) 3. September 2009 (2009-09-03)
- Aco Passavant Ag: "ACO Tunnel Spezialprodukte für Tunnel und Kanalisation", Produktkatalog der Firma ACO Passavant AG, 30. September 2008 (2008-09-30), Seiten 1-12, XP055169015, Gefunden im Internet: URL:http://www.aco.ch/it/files/ACOTunnel_d eutsch_klein.pdf [gefunden am 2015-02-11]
- Betonwerk Neu-Ulm Gmbh & Co. Kg: "Preisliste 2012", , 1. April 2012 (2012-04-01), Seiten 1-10, XP055169409, Gefunden im Internet: URL:https://web.archive.org/web/2015021214 3544/http://www.rohr.de/uploads/tx_mpdownl oadcenter/Preisliste_Schlitzrinne_2012.pdf [gefunden am 2015-02-12]

## Beschreibung

Die Erfindung betrifft ein Betonformteil, nämlich eine Beton-Schlitzrinne bzw. Entwässerungsrinne aus ultrahochfestem Beton sowie ein Verfahren zur Herstellung des Betonformteils.

Die Anforderungen an Bauwerkstoffe, insbesondere an Betone werden im Bereich der Bauindustrie stetig größer. Aus Beton hergestellte Gegenstände werden immer höheren Belastungen ausgesetzt. Die auftretenden Belastungen sind dabei einerseits mechanischer Natur, beispielsweise durch die Belastung mit Gegenständen, Fahrzeugen oder aufgrund baustatischer Anforderungen, andererseits sind auch umwelteinflussbedingte Belastungen, wie beispielsweise Frostschutz, insbesondere Tausalzbeständigkeit und Witterungsbeständigkeit und auch chemische Belastungen im Bereich der industriellen Anwendung von erheblicher Relevanz. Neben den besprochenen Eigenschaften sollen Betone jedoch auch den immer relevanter werdenden Anforderungen des Umweltschutzes, der Energieeffizienz bei ihrer Herstellung sowie der Transportierbarkeit und Flexibilität des Einsatzes genügen.

Im Bereich der Betonindustrie hat sich hierbei eine neue, derzeit noch nicht nach DIN-Normen standardisierte Gattung von Betonen herauskristallisiert, welche unter dem Gattungsbegriff der "ultrahochfesten Betone" geführt wird. Derartige Betone zeichnen sich durch extrem hohe Druckfestigkeiten aus, welche insbesondere oberhalb der in der DIN EN 206-1 definierten Festigkeitsklasse C 100/115 liegen.

Aus dem Stand der Technik ist seit langer Zeit bekannt, dass die Betonrezeptur, welche als Dreiphasenwerkstoff aus Zement, Wasser und Gesteinskörnungen besteht, durch zusätzliche Stoffe ergänzt werden kann, um die Eigenschaften des Betons zu verbessern. Für eine besonders effektive Gestaltung der Betonparameter wird vor allem eine sehr dichte Packung der Feinstoffe besonders unterhalb einer Korngrenze von 0,125 Millimetern bis hin zum Nanobereich angestrebt, was insbesondere durch die Verwendung von Mikrosilika, Quarzmehl oder dergleichen erreicht wird. Die technologische Besonderheit von ultrahochfesten Betonen (UHPC - Englisch: ultra high performance concrete) liegt in einer extrem hohen Gefügedichte, welche bei optimaler Herstellung nahezu keine innen liegenden Poren oder Mikrorisse aufweist. Durch die extrem hohe Gefügedichte wird eine hohe Druckfestigkeit der ultrahochfesten Betone erreicht, wobei oftmals auch auf die zusätzliche Verwendung von Bewehrungen in Form von Stahlarmierungen verzichtet werden kann. Versuche hierzu sind z.B. aus Chemical Abstracts, 107 (1987)16.Nov, No. 20 oder aus der JP 2009 196 856 A bekannt.

Nachteilig an derartigen ultrahochfesten Betonen ist ihre stets erhebliche Sprödigkeit, welche sie bei einer Vielzahl von technologischen Anwendungen in Frage stellt. Betonformteile in Form von Schlitz- oder Entwässerungsrinnen werden z.B. von Herstellern wie ACO Passavant AG (CH) oder Betonwerk Neu-Ulm GmbH & Co. KG (DE) bereit gestellt und sind z.B. auch aus der EP 1 277 553 A2 oder der US 2007 0079 732 A1 bekannt. Um die erforderliche Bruchstabilität bei der üblichen Länge dieser Bauteile nach dem Stand der Technik, insbesondere auch beim Handhaben mit einem Kran während des Verlegens aufzuweisen, benötigen die bekannten Betonformteile eine erhöhte Wandstärke aus Beton. Dies wirkt sich ungünstig auf den Preis der Betonformteile und das Gewicht aus, wobei letzteres wiederum Kosten bei Handhabung und Logistik mit sich bringt.

Aufgabe der Erfindung ist es daher, ein aus ultrahochfestem Beton hergestelltes Betonformteil mit einem weiteren Verhältnis der Längenausdehnung zu einer minimalen Wandstärke zur Verfügung zu stellen und ein Verfahren zur Herstellung eines Betonformteils bereit zu stellen, welches die Nachteile des Standes der Technik vermeidet.

Ausgehend vom Stand der Technik wird diese Aufgabe durch ein Betonformteil nach dem Anspruch 1sowie ein Verfahren zur Herstellung eines Betonformteils nach Anspruch 6 gelöst. Vorteilhafte Weiterbildungen sowie zweckmäßige Ausgestaltungen sind in den abhängigen Ansprüchen angegeben.

Zur Herstellung eines Betons bedarf es eines Bindemittels, welches die chemische, innen liegende Verbindung eines Zementsteins herstellt. Dieser sogenannte "Zementleim" sorgt für die Verbindung der Bestandteile des Betons und trägt somit wesentlich zu den Eigenschaften des resultierenden Betons bei. Das neuartige Bindemittel zur Herstellung eines Zementsteins ist dadurch gekennzeichnet, dass das Bindemittel eine Mischung von mindestens zwei Zementarten unterschiedlicher Endfestigkeit umfasst.

Es existieren Zemente aus verschiedenen Klinkerarten, wobei die Portlandzemente sowie die Hochofenzemente eine entscheidende Rolle spielen. Auf die einschlägige Literatur aus dem Stand der Technik, insbesondere auf die jeweiligen DIN-Normen wird hiermit verwiesen und darauf Bezug genommen. Durch die Verwendung einer Mischung von zwei Zementen unterschiedlicher Endfestigkeit wird erzielt, dass im Zementstein flexiblere und härtere Bereiche entstehen, wodurch ein harter, aber dennoch duktiler und in gewisser Weise auf einer Betonskala "elastischer" Zementstein aufgrund seines Gefüges (Matrix) entsteht.

Entsprechender Beton findet im erfindungsgemäßen Herstellungsverfahren Verwendung.

In einer zweckmäßigen Weiterbildung umfasst das Bindemittel des weiteren Kalksteinmehl. Die Hinzugabe von Kalksteinmehl, welches ebenfalls als Bindemittel genutzt wird, verbessert die Leistungsfähigkeit durch die Hinzufügung einer weiteren Festigkeitsklasse. Hierbei kann es insbesondere darauf ankommen, dass das Kalksteinmehl nicht zusammen mit den Zementen zermahlen wird, sondern mit nahezu unbeschädigten Partikeloberflächen als separat zugegebene Körnung in das Bindemittel gemischt wird. Eine Folge dieser unbeschädigten Partikelzugabe ist ein sehr moderater Wasseranspruch der gesamten Mischung.

In einer weiteren zweckmäßigen Ausgestaltung der Verfahrensrezeptur ist vorgesehen, dass das Verhältnis der Bestandteile des Bindemittels nämlich der Zementmischung und des Kalksteinmehls zwischen 5:1 und 2:1, vorzugsweise 3:1 insbesondere 3,5:1 ist. Derartig abgestimmte Mischverhältnisse erzielen einen hohen Flexibilitätsbereich bei der Verarbeitung des Bindemittels bzw. Mörtels und des daraus hergestellten Betons.

In einer überdies zweckmäßigen Ausgestaltung der Verfahrensrezeptur ist vorgesehen, dass das Bindemittel eine Mischung von Zementen der Art "N" (normale Festigkeit), Festigkeitsklasse 42,5 sowie 52,5 umfasst, wobei vorzugsweise der Anteil der Festigkeitsklasse 42,5 mindestens gleich dem Anteil der Festigkeitsklasse 52,5 ist, insbesondere das Verhältnis 42,5:52,5 kleiner 5:3 insbesondere das Verhältnis in etwa 4:3 ist. Die Eigenschaften des Bindemittels werden durch die Auswahl der entsprechend zueinander abgestimmten Verhältnisse der Zementarten positiv beeinflusst, da sich auf diese Weise die Festigkeitsbereiche im späteren Betongefüge optimal ergänzen.

In einer weiteren zweckmäßigen Ausgestaltung der Verfahrensrezeptur ist überdies vorgesehen, dass das Bindemittel aus zwei Portlandzementen (CEM I) und/oder eine Mischung von Portlandzement (CEM I) sowie Hochofenzement (CEM III) umfasst. Die Verwendung unterschiedlicher Zementarten lässt eine Abstimmung der Kornzusammensetzung mit entsprechenden Verwendungszwecken zu, sodass beispielsweise unterschiedliche Eigenschaften für Transportbeton oder für Vorort in einem Betonwerk verarbeiteten Beton (Ortbeton) erreicht werden können. Nicht zuletzt sind dabei die zur Herstellung von Betonformteilen erheblichen Zeiten bis zur Möglichkeit der Ausschalung beeinflussbar.

In einer weiteren zweckmäßigen Ausgestaltung der Verfahrensrezeptur des ultrahochfesten Betons ist vorgesehen, dass die minimale Korngröße der Partikel der Füllstoffe sowie der Zusatzstoffe 0,5 µ-Meter, vorzugsweise 1 µ-Meter beträgt. Durch die unterseitige Begrenzung der minimalen Korngröße der Partikel, insbesondere durch den Verzicht auf die Verwendung sogenannter Mikrosilika wird erreicht, dass der Beton im Inneren eine ausreichende Feinstruktur aufweist, um die notwendigen elastischen Eigenschaften bereit zu stellen, um sich gegenüber dem ultrahochfesten Beton nach dem Stand der Technik insbesondere in der Sprödheit abzugrenzen. Der ultrahochfeste Beton zeichnet sich durch einen vorteilhaften Elastizitätmodul aus, und kann erheblichen Beanspruchungen und Spannungen auch ohne die Verwendung von Bewehrungen Stand halten.

Ein weiterer Aspekt der Erfindung ist ein Betonformteil, nämlich eine Beton-Schlitzrinne, welches nach erfindungsgemäßem Verfahren hergestellt wird. Die erfindungsgemäß verbesserten Eigenschaften sind den oben genannten beschriebenen Betoneigenschaften zu entnehmen.

Eine zweckmäßige Weiterbildung des erfindungsgemäßen Betonformteils ist insbesondere dadurch gekennzeichnet, dass das Betonformteil bewehrungsfrei, insbesondere Stahlbewehrungsfrei ausgebildet ist. Die Verwendung von Fasern, beispielsweise Polymerfasern, wird dabei vorliegend nur begrenzt als Bewehrung verstanden, wobei auch in einer vorteilhaften Weiterbildung auf derartige Bewehrungen verzichtet wird.

In einer überdies zweckmäßigen Ausgestaltung eines erfindungsgemäßen Betonformteils ist vorgesehen, dass das Betonformteil im Betongefüge eine elaszititätserzeugende Mikrostruktur aufweist, wobei insbesondere ein Elaszititätsmodul von 30 Kilonewton pro Quadratmillimeter oder weniger erreicht wird. Die Mikrostruktur, insbesondere eine Mikroporösitat, welche beispielsweise durch die Verwendung entsprechender minimaler Korngrößen erreicht werden kann, gibt dem Betongefüge die Gelegenheit, auftretenden Kräften auszuweichen, ohne das Brüche im Betongefüge, insbesondere im Zementstein entstehen. Auf diese Weise werden sehr vorteilhafte Elaszititätsmodule erreicht, welche die vorteilhaften Eigenschaften des Betons und der daraus hergestellten Formteile prägen.

Die weiteren vorteilhaften Eigenschaften des erfindungsgemäßen Betonformteils sollen nachfolgend im Rahmen der Ausführungsbeispiele näher erläutert werden. Die Erfindung ist dabei jedoch nicht auf die dargestellte Ausführungsform beschränkt.

Das erfindungsgemäße Verfahren zur Herstellung eines Betonformteils aus ultrahochfestem Beton ist darüber hinaus dadurch gekennzeichnet, dass der Beton nach seiner Anmischung nach der Hydration der aluminatischen Phase, kurz vor Ablauf der domanten Phase erst in die Schalung eingebracht wird, wobei sodann in der Schalung die Hydration der silikatischen Phase erfolgt. Das Betongefüge wird dabei somit erst vor seiner letztendlichen Ausbildung und anschließenden Fixierung in der silikatischen Phase in die Schalung eingebracht, und kann dabei in der erfindungsgemäß vorteilhaften Strukturbildung stabilisiert werden.

Es zeigen dabei:
- Figur 1: einen Strukturquerschnitt durch eine Entwässerungsrinne mit gewinkeltem Rinneneinlass;
- Figur 2: die Entwässerungsrinne nach Fig.1 in schematischer perspektivischer Darstellung;
- Figur 3: einen Strukturquerschnitt durch eine Entwässerungsrinne mit oberseitigem Rinneneinlass;
- Figur 4: die Entwässerungsrinne nach Fig.3 in schematischer perspektivischer Darstellung.

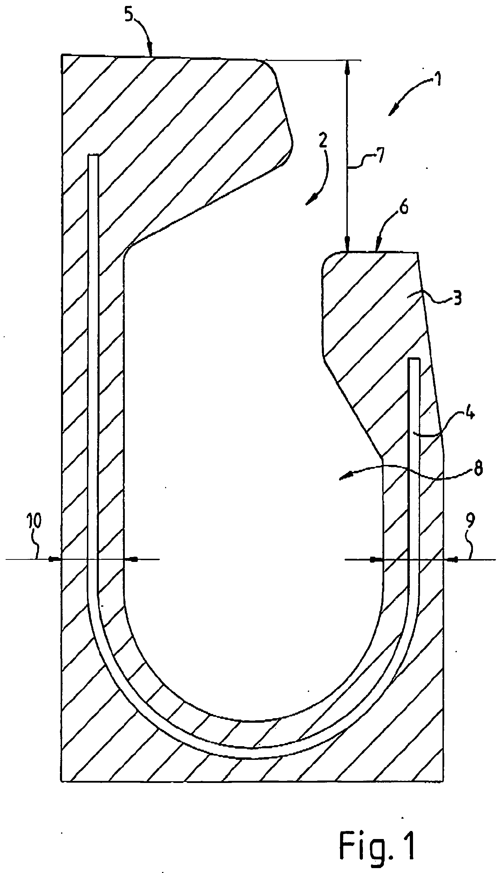

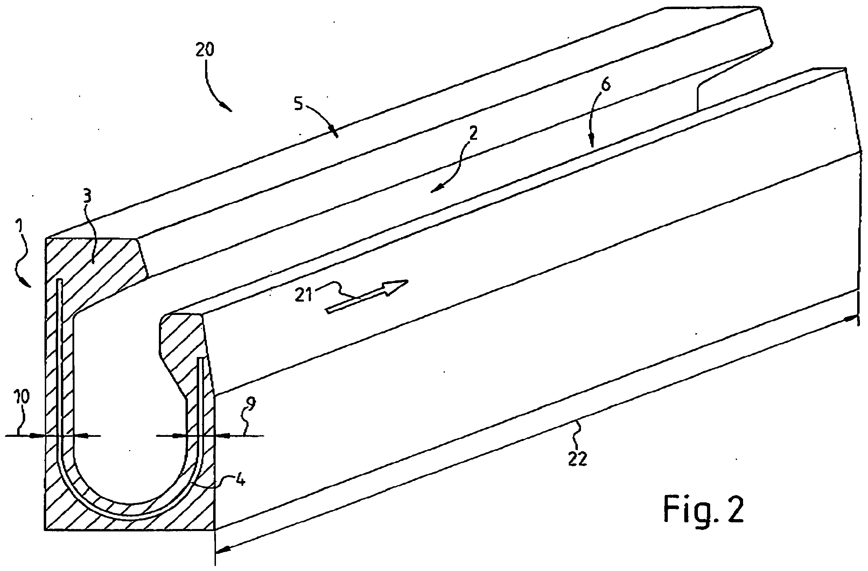

Im Einzelnen zeigt Fig. 1 einen Strukturquerschnitt 1 eines erfindungsgemäßen Betonformteils 20. Das Betonformteil 20 (in Figur 2 perspektivisch dargestellt) ist dabei als Entwässerungsrinne oder so genannte Schlitzrinne ausgebildet, wobei vorliegend der Rinneneinlass 2 seitlich gewinkelt angeordnet ist. Der Strukturquerschnitt wird durch ein Betonteil 3 (hier kariert dargestellt) gebildet in dessen Volumen eine Bewehrung 4 eingebettet ist. Der Strukturquerschnitt 1 weist an seiner oberen Seite Fahrflächen 5 und 6 auf. Die Fahrfläche 5 ist dabei gegenüber der Fahrfläche 6 erhöht ausgebildet. Entsprechend der Einbausituation der Entwässerungsrinne bildet dieser Höhenversatz 7 eine Art Bordstein aus, welcher eine Fahrbahn oder einen Platz begrenzen kann. Hinsichtlich der statischen Belastbarkeit muss jedoch sowohl die Fahrfläche 5 als auch die Fahrfläche 6 den Anforderungen genügen, da beide Fläche einer Straße oder einem Platz zugeordnet sind und möglicherweise mit Fahrzeugen befahren werden.

Der Strukturquerschnitt 1 weist entsprechend seiner Formgebung unterschiedlichen Wandstärken auf. Im Bereich eines Aufnahmeraums 8, in welchen das bei der Entwässerung einer Fläche oder eine Straße auftretende Wasser eintritt und abgeführt wird, ist eine nahezu gleichmäßige Wandstärke zwischen Aufnahmeraum und Bewehrung gegeben. Die rechts- sowie linksseitige Wandstärke 9 bzw. 10 ist über den gesamten Strukturquerschnitt als minimale Wandstärke anzusehen, da an allen anderen Stellen mehr Material zwischen dem Aufnahmeraum 8 und der Außenwand des Strukturquerschnitts liegt.

In einer vorteilhaften Ausführungsform beträgt diese minimale Wandstärke lediglich 7cm oder sogar nur 6cm. Es ist darauf hinzuweisen, dass nach gängigen Vorschriften und Zertifizierungserfordernissen eine Betonüberdeckung von mindestens etwa 3cm über Bewehrungsbestandteilen vorzuliegen hat. Eine Wandstärke von leicht über 6cm ist daher nach aktuellen Vorschriften anzustreben, für die Erfindung jedoch nicht zwingend erforderlich. Der in Fig.1 dargestellte Strukturquerschnitt gibt dabei aus Übersichtlichkeitsgründen die Stärke der Bewehrung nur schematisch an und lässt keine direkte Dimensionsbestimmung der Überdeckung zu.

Der Lastabtrag der beiden Fahrflächen 5,6 erfolgt in statischer Hinsicht ausschließlich über die Seitenwandabschnitte mit den Wandstärken 10,9 so dass diese Wandstärken als Mindestwandstärke des tragenden Querschnitts anzusehen ist.

Eine derartig dünnwandige und dennoch den Stabilitätsanforderungen genügende Entwässerungsrinne zeichnet sich durch ihr vorteilhaft leichtes Gewicht gegenüber bekannten Entwässerungsrinnen aus. Bei erfindungsgemäßen Entwässerungsrinnen besteht die Möglichkeit einer Beladung von Transport-LKW mehr Entwässerungsrinnen unter Beachtung der maximalen Zuladung, als es bei herkömmlichen Rinnen möglich war. Dadurch werden Transportkosten und Transportzeiträume eingespart.

Figur 2 zeigt eine perspektivische schematische Darstellung einer Entwässerungsrinne 20 mit einem Strukturquerschnitt 1 nach Figur 1.

Der Strukturquerschnitt 1 ist dabei in Längsrichtung der Körperform 21 "extrudiert". Das Betonformteil weist eine Längsausdehnung 22 auf, welche entsprechend den standardisierten Abmessungen ausgeführt wird.

Wählt man beispielsweise eine übliche Längsausdehnung 22 von 400cm bei einer Mindestwandstärke des tragenden Querschnitts 9,10 von 7cm so erhält man ein Verhältnis von 400/7 = 57,14. Verringert man die Mindestwandstärke des tragenden Querschnitts weiter auf 6cm oder darunter, so steigt das Verhältnis auf 400/6 = 66,67 oder mehr an. Vergleicht man dieses Verhältnis mit der konventionellen Mindestwandstärke einer Entwässerungsrinne nach dem Stand der Technik, welche üblicherweise 12 cm beträgt, so liegt dieser Wert bei 400/12 = 33,33. Das gegenüber dem Stand der Technik erheblich verkleinerte Volumen des Betonteils 3 (hier kariert dargestellt) bei der erfindungsgemäßen Ausführungsform führt zum verringerten Gesamtgewicht bei erhaltener Stabilität aufgrund des erfindungsgemäßen Betons.

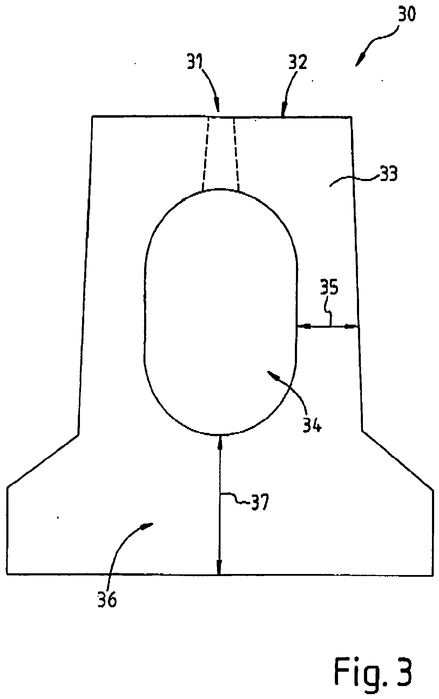

Figur 3 zeigt einen Strukturquerschnitt 30 eines Betonformteils 40 in Form einer Entwässerungsrinne mit senkrechtem Rinneneinlass 31. Der Strukturquerschnitt weist an seiner oberen Seite eine Fahrfläche 32 auf, welche die auftretenden Lasten trägt.

Im Inneren des Betonteils 33, welches vorliegend ohne Bewehrung ausgebildet ist und im vollen Volumen aus erfindungsgemäßem Beton besteht, ist ein Aufnahmeraum 34 für anfallendes Wasser gebildet. Dieser Aufnahme Raum wird seitlich durch Betonwände begrenzt, welche über einen weiten vertikalen Bereich eine minimale Wandstärke 35 aufweisen. Diese Mindestwandstärke 35 ist jedoch, ebenso wie in Figuren 1 und 2 bereits erläutert, der tragende Querschnitt, da über diesen Bereich die auftretenden Kräfte der Fahrfläche 32 in den Untergrund abgeleitet werden.

Der Strukturquerschnitt weist weiterhin auf seiner unteren Seite einen Sockel bzw. ein Fundament 36 mit einer Fundamentstärke 37 auf. Dieses einstückig im Betonteil 33 ausgeformte Sockelelement ist Bestandteil der erfindungsgemäßen Entwässerungsrinne, so dass bei der Montage der Entwässerungsrinne auf einer Baustelle auf ein zusätzliches Fundament verzichtet werden kann. Ermöglicht wird dies durch den erheblichen Gewichtsvorteil, welcher durch Materialeinsparungen bei der Mindestwandstärke des tragenden Querschnitts erfolgen können.

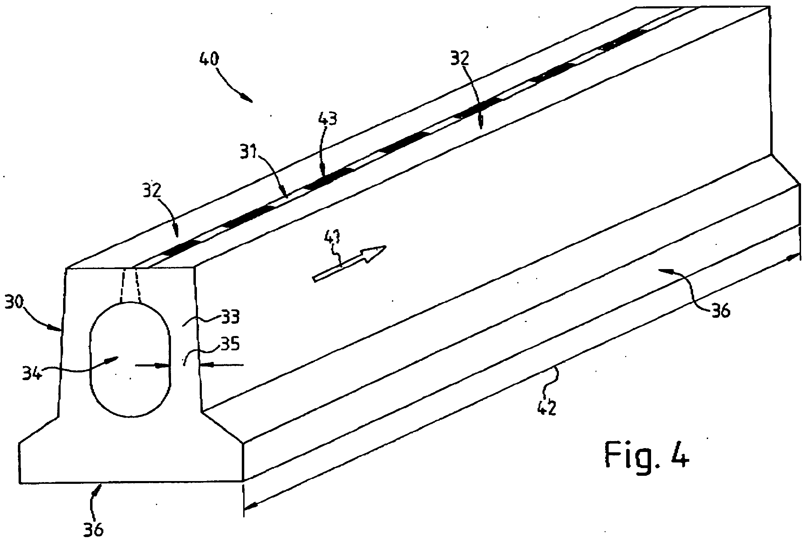

Figur 4 zeigt eine entsprechende schematisch perspektivische Darstellung, wie sie bereits oben in Figur 2 erläutert wurde. Der Strukturquerschnitt 30 ist in Längsrichtung der Körperform 41 bis zur Längenausdehnung 42 des Betonformteils 40 "extrudiert". Der Rinneneinlass 31 ist dabei in Längsrichtung 41 immer wieder durch Stege 43 unterbrochen, um eine befahrbare Fläche bereitzustellen.

In einer vorteilhaften Ausführungsform ist die Mindestwandstärke 35 des tragenden Querschnitts mit 6cm oder kleiner ausgebildet und eine Längsausdehnung von 400cm gegeben. Das Verhältnis dieser Dimensionierungen ist dabei 400/6 = 66,67 und vergrößert sich, wenn die Mindestwandstärke 35 weiter verkleinert wird. Durch diese minimale Wandstärke und das daraus resultierende minimale Betonvolumen besteht die Möglichkeit, den Sockel bzw. das Fundament 36 einstückig mit der Entwässerungsrinne auszuformen, wodurch ein mehrteiliger Aufbau und die damit einhergehenden Kosten vermieden werden. Gleichzeit bleibt das Gewicht einer Entwässerungsrinne innerhalb vertretbarer Parameter für den Transport und die Handhabung auf der Baustelle. Die Fundamenthöhe 37 beträgt dabei ca. 1/3 bis 1/2 der gesamten Höhe des Betonformteils.

Selbstverständlich ist auch eine Ausführungsform nach Figuren 3 und 4 denkbar, bei welcher eine Bewehrung im Fundamentabschnitt und/oder im Beton um den Aufnahmeraum 35 integriert ist, je nachdem, welche Anforderungen an die Entwässerungsrinne statisch gestellt werden.

Es ist daher vorteilhaft und erfindungsgemäß, dass das Betonformteil einen Fundamentabschnitt umfasst, insbesondere einstückig mit einem Fundamentabschnitt ausgebildet ist.

### Bezugszeichenliste

- 1: Strukturquerschnitt
- 2: Rinneneinlass
- 3: Betonteil
- 4: Bewehrung
- 5: Fahrfläche
- 6: Fahrfläche
- 7: Höhenversatz
- 8: Aufnahmeraum
- 9: Mindestwandstärke des tragenden Querschnitts
- 10: Mindestwandstärke des tragenden Querschnitts

- 20: Betonformteil / Entwässerungsrinne
- 21: Längsrichtung der Körperform
- 22: Längenausdehnung

- 30: Strukturquerschnitt
- 31: Rinneneinlass
- 32: Fahrfläche
- 33: Betonteil
- 34: Aufnahmeraum
- 35: Mindestwandstärke des tragenden Querschnitts
- 36: Sockel / Fundament
- 37: Fundamentstärke

- 40: Betonformteil / Entwässerungsrinne
- 41: Längsrichtung der Körperform
- 42: Längenausdehnung
- 43: Steg

## Patentansprüche

1. Betonformteil (20), nämlich Beton-Schlitzrinne bzw. Entwässerungsrinne, aus ultrahochfestem Beton, wobei der ultrahochfeste Beton eine Festigkeitsklasse aufweist, welche oberhalb der in der DIN EN 206-1 definierten Festigkeitsklasse C 100/115 liegt, wobei das Betonformteil (20) eine im Wesentlichen längsgerichtete Körperform aufweist und durch eine Längsausdehnung (42) und einen Strukturquerschnitt (30) mit variabler Wandstärke (9,10) definiert ist, *wobei eine rechts- sowie linksseitige Wandstärke (9) bzw. (10) über den gesamten Strukturquerschnitt (30) als minimale Wandstärke (9, 10) anzusehen ist,*
**dadurch gekennzeichnet, dass**
das Verhältnis der Längenausdehnung (42) zu einer minimalen Wandstärke (9,10) im Strukturquerschnitt (30) größer oder gleich 400 zu 7 ist.

2. Betonformteil nach Anspruch 1, **dadurch gekennzeichnet, dass** das Betonformteil bewehrungsfrei, insbesondere stahlbewehrungsfrei und/oder epoxydfrei ausgebildet ist.

3. Betonformteil nach einem oder mehreren der vorangegangenen Ansprüche, **dadurch gekennzeichnet, dass** das Betonformteil eine Belastbarkeit von mindestens D 400 kN aufweist.

4. Betonformteil nach einem oder mehreren der vorangegangenen Ansprüche, **dadurch gekennzeichnet, dass** zumindest teilweise eine Wandstärke eines tragenden Querschnitts von ca. 7cm, vorzugsweise 6cm bei vorhandener Bewehrung und unterhalb 6cm ohne Bewehrung vorhanden ist.

5. Betonformteil nach einem oder mehreren der vorangegangenen Ansprüche, **dadurch gekennzeichnet, dass** das Betonformteil im Betongefüge eine elastizitätserzeugende Matrix (Mikrostruktur) aufweist wobei insbesondere ein Elastizitätsmodul von 30 kN/mm² oder weniger erreicht wird.

6. Verfahren zur Herstellung eines Betonformteils nach einem der Ansprüche 1 bis 5 aus Beton, nämlich aus ultrahochfestem Beton, **dadurch gekennzeichnet, dass** der Beton nach seiner Anmischung nach der Hydration der aluminatischen Phase, kurz vor Ablauf der dormanten Phase in die Schalung eingebracht wird, in welcher die Hydration der silikatischen Phase erfolgt wobei der Beton in seiner Rezeptur ein Bindemittel, Füllstoffe (Zuschlagstoffe), Beton-Zusatzstoffe sowie Wasser umfasst, und das Bindemittel eine Mischung von mindestens zwei Zementen unterschiedlicher Endfestigkeit umfasst.

7. Verfahren nach Anspruch 6, **dadurch gekennzeichnet, dass** die Mischung von zwei Zementen eine Mischung von zwei Portlandzementen (CEM I) und/oder eine Mischung von Portlandzement (CEM I) sowie Hochofenzement (CEM III) umfasst.

8. Verfahren nach Anspruch 6 oder 7, **dadurch gekennzeichnet, dass** das Bindemittel Kalksteinmehl umfasst wobei vorzugsweise das Verhältnis der Bestandteile der Zementmischung und des Kalksteinmehls des Bindemittels zwischen 5:1 und 2:1, bevorzugt 3:1 insbesondere 3,5:1 ist.

9. Verfahren nach Anspruch 6, 7 oder 8, **dadurch gekennzeichnet, dass** das Bindemittel eine Mischung von Zementen der Festigkeitsklasse 42,5 sowie 52,5 umfasst wobei vorzugsweise der Anteil der Festigkeitsklasse 42,5 mindestens gleich dem Anteil der Festigkeitsklasse 52,5 ist, insbesondere das Verhältnis 42,5 zu 52,5 kleiner 5:3, insbesondere das Verhältnis 42,5 zu 52,5 in etwa 4:3 ist und/oder dass die minimale Korngröße der Partikel der Füllstoffe sowie der Zusatzstoffe 0,5µm, vorzugsweise 1µm beträgt.

## Claims

1. Concrete molded part (20), namely a concrete slit channel or dewatering channel, of ultra high-strength concrete, wherein the ultra high-strength concrete has a strength class which is above the strength class C 100/115 defined in DIN EN 206-1, wherein the concrete molded part (20) has a substantially longitudinal body shape and is defined by a longitudinal extension (42) and a structural cross-section (30) with variable wall thickness (9, 10), wherein a wall thickness (9) or (10) on the right and left sides or above the entire structural cross-section (30) is to be seen as a minimum wall thickness (9, 10),
**characterized in that**
the ratio of the longitudinal extension (42) to a minimum wall thickness (9, 10) in the structural cross-section (30), is greater than or equal to 400 to 7.

2. Concrete molded part according to claim 1,
**characterized in that**
the concrete molded part is constructed without a reinforcement, in particular without steel braces and/or without epoxide.

3. Concrete molded part according to one or more of the preceding claims,
**characterized in that**
the concrete molded part has a load capacity of at least D 400 kN.

4. Concrete molded part according to one or more of the preceding claims,
**characterized in that**
at least part of a wall thickness of a supporting cross-section of approximately 7 cm, preferably 6 cm, is provided with reinforcement, while below 6 cm without reinforcement.

5. Concrete molded part according to one or more of the preceding claims,
**characterized in that**
the concrete molded part in the concrete structure has an elasticity-generating matrix (microstructure), in particular wherein a modulus of elasticity of 30 kN/mm² or less is achieved.

6. Method for the production of a concrete molded part according to one of the claims 1 to 5 from concrete, namely ultra high-strength concrete,
**characterized in that**
the concrete is introduced into the formwork after the hydration of the aluminous phase shortly before the end of the dormant phase, wherein the hydration of the silicatic phase then takes place, and wherein the concrete comprises a binder, fillers, aggregates, concrete additives and water in its formulation, while the binder comprises a mixture of at least two cements of different ultimate strength.

7. Method according to claim 6,
**characterized in that**
the mixture of two cements comprises a mixture of two portland cements (CEM I) and/or a mixture of portland cement (CEM I) as well as blast-furnace cement (CEM III).

8. Method according to claim 6 or 7,
**characterized in that**
the binder comprises limestone powder, whereby the ratio of the constituents of the cement mixture and the limestone powder of the binder is preferably between 5:1 and 2:1, preferably 3:1, in particular 3.5:1.

9. Method according to claim 6, 7 or 8,
**characterized in that**
the binder comprises a mixture of cements of the strength class 42.5 as well as 52.5, wherein the proportion of the strength class 42.5 is preferably at least equal to the proportion of the strength class 52.5, in particular the ratio 42.5 to 52.5 is less than 5:3, in particular the ratio 42.5 to 52.5 is approximately 4:3, and/or the minimum particle size of the particles of the fillers and of the additives is 0.5 µm, preferably 1 µm.

## Revendications

1. Pièce moulée en béton (20), plus précisément cunette en béton ou caniveau en béton, en un béton à ultra-haute résistance, le béton à ultra-haute résistance présentant une classe de résistance qui est supérieure à la classe de résistance C 100/115 définie dans DIN EN 206-1, la pièce moulée en béton (20) présentant une morphologie pour l'essentiel longitudinale, et étant définie par une dilatation longitudinale (42) et une section transversale de structure (30) présentant une épaisseur de paroi (9, 10) variable, une épaisseur de paroi, respectivement (9 et 10), côté droit et côté gauche, devant être considérée sur la totalité de la section transversale de la structure (30) comme étant une épaisseur de paroi minimale (9, 10), **caractérisée en ce que** le rapport de la dilatation longitudinale (42) à une épaisseur de paroi minimale (9, 10) dans la section transversale de la structure (30) est supérieur ou égal à 400:7.

2. Pièce moulée en béton selon la revendication 1, **caractérisée en ce que** la pièce moulée en béton est conçue sans armature, en particulier sans armature d'acier et/ou sans époxyde.

3. Pièce moulée en béton selon l'une ou plusieurs des revendications précédentes, **caractérisée en ce que** la pièce moulée en béton présente une limite de charge d'au moins D 400 kN.

4. Pièce moulée en béton selon l'une ou plusieurs des revendications précédentes, **caractérisée en ce qu'**est présente, au moins partiellement, une épaisseur de paroi d'une section transversale portante d'environ 7 cm, de préférence de 6 cm en présence d'une armature et inférieure à 6 cm sans armature.

5. Pièce moulée en béton selon l'une ou plusieurs des revendications précédentes, **caractérisée en ce que** la pièce moulée en béton présente dans la structure du béton une matrice génératrice d'élasticité (microstructure), auquel cas on atteint en particulier un module d'élasticité de 30 kN/mm² ou moins.

6. Procédé de fabrication d'une pièce moulée en béton selon l'une des revendications 1 à 5 en béton, plus précisément en béton à ultra-haute résistance, **caractérisé en ce que** le béton, après le début du malaxage, après l'hydratation de la phase aluminate, est coulé, avant la fin de la phase dormante, dans le coffrage dans lequel a lieu l'hydratation de la phase silicate, le béton comprenant dans sa formulation un liant, des matières de charge (granulats), des produits d'addition au béton, ainsi que de l'eau, et le liant comprenant un mélange d'au moins deux ciments ayant des résistances finales différentes.

7. Procédé selon la revendication 6, **caractérisé en ce que** le mélange de deux ciments comprend un mélange de deux ciments Portland (CEM I) et/ou un mélange de ciment Portland (CEM I) et d'un ciment de haut fourneau (CEM III).

8. Procédé selon la revendication 6 ou 7, **caractérisé en ce que** le liant comprend de la farine de calcaire, le rapport des constituants du mélange de ciments à la farine de calcaire du liant étant compris entre 5:1 et 2:1, de préférence est de 3:1, en particulier de 3,5:1.

9. Procédé selon la revendication 6, 7 ou 8, **caractérisé en ce que** le liant comprend un mélange de ciments des classes de résistance 42,5 et 52,5, de préférence la proportion de la classe de résistance 42,5 étant au moins égale à la proportion de la classe de résistance 52,5, en particulier le rapport 42,5:52,5 étant inférieur à 5:3, en particulier le rapport 42,5:52,5 étant d'environ 4:3, et/ou que la granulométrie minimale des particules des matières de charge, ainsi que des produits d'addition, est de 0,5 µm, de préférence de 1 µm.
